(19) Europäisches Patentamt
European Patent Office
Office européen des brevets

(11) **EP 1 844 643 B1**

(12) **EUROPÄISCHE PATENTSCHRIFT**

(45) Veröffentlichungstag und Bekanntmachung des Hinweises auf die Patenterteilung:
**26.05.2010   Patentblatt 2010/21**

(51) Int Cl.:
***A01D 75/30*** *(2006.01)*

(21) Anmeldenummer: **07004531.5**

(22) Anmeldetag: **06.03.2007**

(54) **Mähmaschine**

Mowing machine

Faucheuse

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.04.2006   DE 102006017324**

(43) Veröffentlichungstag der Anmeldung:
**17.10.2007   Patentblatt 2007/42**

(73) Patentinhaber: **CLAAS Saulgau GmbH 88348 Bad Saulgau (DE)**

(72) Erfinder:
• **Friel, Holger 19288 Glaisin (DE)**
• **Loebe, Stefan 88348 Bad Saulgau (DE)**

(56) Entgegenhaltungen:
**EP-A- 0 503 395     DE-C1- 4 314 250 GB-A- 714 086     US-A- 4 415 174**

Printed by Jouve, 75001 PARIS (FR)

EP 1 844 643 B1

## Beschreibung

Die Erfindung betrifft ein gezogenes Mähwerk als Kreiselmähwerk mit großer Arbeitsbreite im Bereich der Grünfutterernte in der Landwirtschaft gemäß dem Oberbegriff des unabhängigen Anspruchs 1.

Bekannt sind Mähwerke mit umlaufenden Mähwerkzeugen, deren Mähklingen frei- bzw. schwenkbeweglich am Umfang der Mähscheiben an einem Zapfen aufgehängt sind. Die Mähklingen werden erst durch die Zentrifugalkraft stabilisiert und mähen das Grünfutter dann ohne Gegenschneide ab.

Derartige Mähwerke gibt es in vielfältigen Variationen wie Heck-, Seiten-, Front- und gezogene Mähwerke, aber auch als selbstfahrende Mähwerke oder auch unter dem Begriff Direktfutterschneidwerke.

## Stand der Technik

Gezogene Mähwerke bestehen aus einem oder mehreren nebeneinander liegenden Mähbalken, die am Ende einer Zugdeichsel angeordnet sind, welche am Heck eines Traktors angehängt wird (siehe z.B. EP-A-503395). Dabei wird das Mähwerk von der Zapfwelle des Traktors angetrieben und im Regelfall von der Bordhydraulik des Traktors gesteuert. Mähwerke dieser Art sind mit einem Fahrwerk ausgestattet, welches den größten Teil der Gewichtskraft des Mähwerks gegenüber dem Boden abstützt. In der Arbeitsstellung werden die Mähwerke seitlich neben dem Traktor an der verschwenkten Zugdeichsel geführt. Zur Überführung des Mähwerks in die Transportstellung für den Straßenverkehr wird die Zugdeichesel in ihre Transportstellung zurück geschwenkt, so dass das Mähwerk etwa mittig hinter dem Traktor läuft. Ist das Mähwerk dann noch breiter als das zulässige Straßenverkehrsprofil dieses zulässt, so werden weitere Maßnahmen zur Überführung des Mähwerks in das Straßenverkehrsprofil erforderlich.

Bekannte Ausführungen von Mähwerken verklappen dazu die Mähbalken in eine aufrechte Stellung und vermindern dadurch die Transportbreite. Eine andere Ausführungsart verschwenkt das Mähwerk um eine aufrechte Achse um etwa 90° und hebt das Mähwerk dabei durch ein separates Fahrwerk, dessen Räder in der Arbeitsstellung vom Boden abgehoben sind, vom Boden ab. Dabei sind die Räder des Fahrwerks in der Transportstellung in Fahrtrichtung ausgerichtet und in der Arbeitsstellung des Mähwerks etwa rechtwinklig zur Fahrtrichtung ausgerichtet.

## Aufgabenstellung

Die Erfindung befasst sich mit der Weiterentwicklung von gezogenen Mähwerken der vorgenannten Art unter dem Gesichtspunkt besonders großer Arbeitsbreiten, die sich dennoch in ein zulässiges Straßentransportprofil überführen lassen.

Die Aufgabe der Erfindung ist es daher, ein gezogenes Mähwerk mit großer Arbeitsbreite vorzuschlagen, welches einerseits gute Lenk- und Führungseigenschaften in seiner Betriebsstellung und andererseits gute Lenk- und Führungseigenschaften in seiner Transportstellung im Straßenverkehr aufweist.

## Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht ein gezogenes Mähwerk mit wenigstens zwei Mäheinheiten und wenigstens zwei Staffelreihen vor, die hintereinander und seitlich versetzt zueinander angeordnet sind, wobei zwischen der ersten und letzten Staffelreihe ein Fahrwerk angeordnet ist. Dabei sind die Mähwerke und das Fahrwerk so an der Zugdeichsel angelenkt, dass die Zugdeichsel zur Überführung des Mähwerks in seine Transportstellung um eine Hochachse um einen Schwenkwinkel wesentlich größer als 90° verschwenkt werden kann. Dieser Vorgang des Verschwenkens beinhaltet, dass das Fahrwerk und die Mäheinheiten relativ zur Zugmaschine bzw. zum Traktor um 180° verschwenkt werden, so dass die Stützräder des Fahrwerks in der Arbeitsfahrt, was deren Drehrichtung anbetrifft, entgegengesetzt zur Drehrichtung der Transportfahrt drehen. Beim umgekehrten Schwenkvorgang von der Transport- in die Arbeitsstellung gilt dieses mit umgekehrtem Vorzeichen. Bedingt dadurch, dass der Anstellwinkel zwischen dem Fahrwerk und der Zugdeichsel die Laufrichtung des Mähwerks bestimmt, erzwingt dieser Anstellwinkel den Spurversatz zwischen dem Fahrwerk des Mähwerks und der Zugmaschine. Verschwindet der Anstellwinkel identisch zu Null, so bedeutet dieses, dass das Mähwerk in der Spur des Zugfahrzeugs läuft. Nimmt der Anstellwinkel einen Betrag größer als Null Grad an, so läuft das Mähwerk in einem Querversatz zur Spur der Zugmaschine, und je nach dem, ob der Anstellwinkel bezogen auf die vertikale Längsmittelebene einen positiven oder negativen Winkel annimmt, läuft das Mähwerk links oder rechts der Spur des Trägerfahrzeugs. Die Größe des Anstellwinkels und damit der Schwenkantrieb zum Verschwenken der Zugdeichsel eignet sich daher auch in besonderer Weise dazu, den Spurversatz zwischen Mähwerk und Zugfahrzeug zu steuern und dieses insbesondere auch in Kurvenfahrten.

Nach dem Verschwenken in die Transportstellung ist die im Mähbetrieb bzw. in der Arbeitstellung vordere Staffelreihe in der Transportstellung nunmehr die hintere Staffelreihe und die hintere Staffelreihe in der Transportstellung nunmehr die vordere Staffelreihe.

Dabei liegt die Hochachse, um welche die Zugdeichsel verschwenkt wird, in der Arbeitstellung vorzugsweise vor der vorderen Staffelreiche, und in der Transportstellung hinter der letzten Staffelreiche. Bedingt durch die Verschwenkung der Zugdeichsel von der Arbeits- in die Transportstellung kehrt sich auch gleichzeitig die Fahrtrichtung des Fahrwerk des Mähwerks relativ zum Traktor um, wodurch die Stützräder des Fahrwerks in der Transportfahrt die entgegengesetzte Drehrichtung als die in der Arbeitsfahrt annehmen. Dieses verkürzt in besonders vorteilhafter Weise die Gespannlänge im Transport, wobei es die Erfindung prinzipiell aber auch zulässt, dass die Hochachse jede andere Lage einnimmt, und somit auch eine Lage zwischen der ersten und zweiten Staffelreihe möglich ist.

Diese Ausgestaltung der Anlenkung der Zugdeichesel beinhaltet den Vorteil, das die Zugdeichsel auch bei großen Arbeitsbreiten in der Arbeitstellung noch einen relativ geringeren Anstellwinkel zur Fahrtrichtung einnehmen kann, wodurch die Seitenkraft, welche die Zugdeichsel auf den Anhängepunkt des Mähwerks überträgt und welche als Querkraft von dem Traktor aufgenommen und am Boden durch die Räder des Traktors abgestützt werden muss, relativ gering gehalten werden kann. Dieses wirkt sich günstig auf die Lenkeigenschaften des Gespanns Traktor und gezogenes Mähwerk aus.

In der Transportstellung hingegen wirkt sich diese Ausgestaltung dahingehend aus, dass die Gespannlänge Traktor und Mähwerk erheblich verkürzt werden kann, welches sich nunmehr günstig auf die Lenk- und Nachlaufeigenschaften des Gespanns und damit auch günstig auf die Verkehrssicherheit im Straßenverkehr auswirkt.

**Ausführungsbeispiel**

Nähere Einzelheiten der Erfindung sind den nachfolgenden Figurendarstellungen und deren Beschreibungen zu entnehmen.

Fig. 1    zeigt ein Mähwerk nach der Erfindung in einer Draufsicht in Arbeitsstellung mit einem positiven Anstellwinkel als rechts mähendes Mähwerk

Fig. 2    zeigt ein Mähwerk nach der Erfindung in einer Draufsicht in Arbeitsstellung mit einem negativen Anstellwinkel als links mähendes Mähwerk

Fig. 3    zeigt ein Mähwerk nach der Erfindung in einer Draufsicht in einer Zwischenstellung mit einem Anstellwinkel identisch zu Null

Fig.4    zeigt ein Mähwerk nach der Erfindung in einer Draufsicht in einer Momentaufnahme während des Verschwenkens von der Arbeitsstellung gemäß Fig.1 in die Transportstellung

Fig. 5    zeigt ein Mähwerk nach der Erfindung in einer Draufsicht in einer Momentaufnahme nach Beendigung des Verschwenkens aus der Arbeitsstellung gemäß Fig.1 in die Transportstellung

Fig. 6    zeigt ein Mähwerk nach der Erfindung in einer Draufsicht in der Transportstellung

Fig. 7    verdeutlicht den Zusammenhang zwischen einem positiven Anstellwinkel und einem positiven Schwenkwinkel

Fig. 8    verdeutlicht den Zusammenhang zwischen einem negativen Anstellwinkel und einem negativen Schwenkwinkel.

Fig. 9    verdeutlicht die Zusammenhänge zwischen den unterschiedlichen Betriebsstellungen und der verkürzten Gespannlänge in der Transportstellung

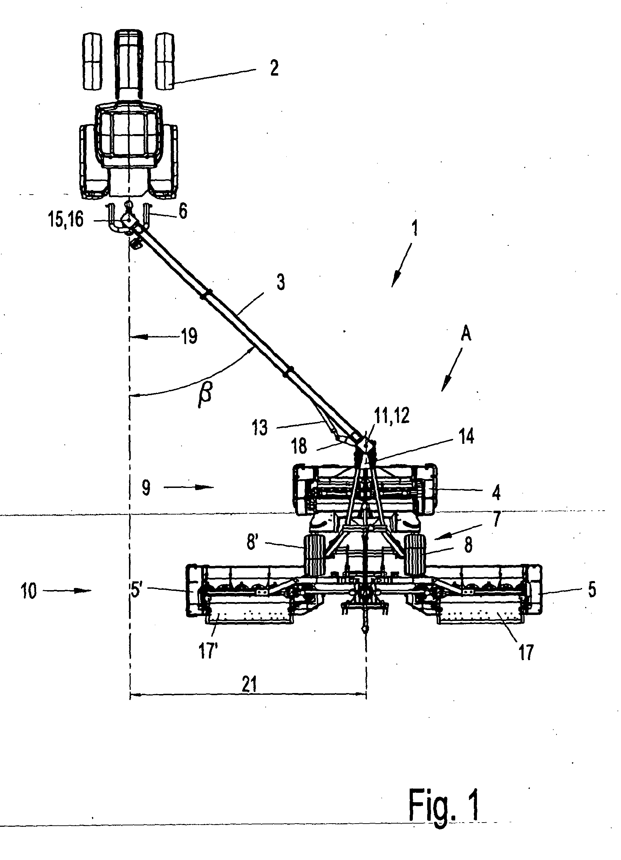

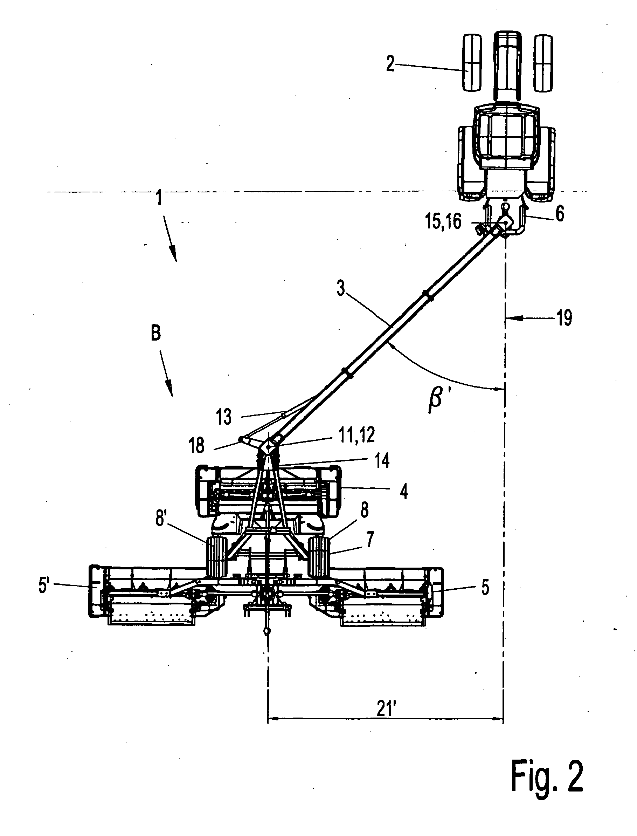

Fig. 1 zeigt ein Mähwerk 1 nach der Erfindung in einer Draufsicht in einer rechtsseitigen Arbeitsstellung A mit einem positiven Anstellwinkel β als rechts mähendes Mähwerk 1 und Fig. 2 zeigt ein Mähwerk 1 nach der Erfindung in einer Draufsicht in einer linksseitigen Arbeitsstellung B mit einem negativen Anstellwinkel β' als links mähendes Mähwerk 1. Das Mähwerk 1 weist drei Mäheinheiten 4,5,5' auf, die an einer Zugdeichsel 3 angelenkt sind. Die Mäheinheit 4 bildet die erste Staffelreihe 9 und die Mähwerke 5,5' bilden die zweite Staffelreihe 10. Zwischen der ersten Staffelreihe 9 und der zweiten Staffelreihe 10 befindet sich das Fahrwerk 7 mit seinen Stützrädern 8,8'. Die Zugdeichsel 3 ist mit einer Kupplungseinrichtung 6 an den Unterlenkern der Zugmaschine bzw. eines Traktors 2 gekoppelt. Am vorderen Ende der Zugdeichsel 3 ist diese in einem Schwenkgelenk 15 um die Hochachse 16 verschwenkbar mit der Kupplungseinrichtung 6 verbunden. Am hinteren Ende der Zugdeichsel 3 ist diese mit dem Maschinengestell 14, welches die Mäheinheiten 4,5,5' und das Fahrgestell 7 aufnimmt, in einem Schwenkgelenk 11 um die Hochachse 12 verschwenkbar verbunden. Das Schwenkgelenk 12 wird dabei von einem Stellantrieb 13 überbrückt, der an einem Hebelarm 18 angreift und in der Arbeitsstellung festgesetzt und damit arretiert ist. Der Stellantrieb 13 ist in dem Ausführungsbeispiel dargestellt als doppeltwirkender Hydraulikzylinder. Der Anstellwinkel β bzw. β', der den Winkel zwischen der vertikalen Längsmittelebene 19 und der Zugdeichsel 3 einschließt, ist bestimmend für den Spurversatz 21,21' zwischen der Spur des Zugfahrzeugs 1 und der Spur des Fahrwerks 7 des Mähwerks 1. Die Mäheinheiten 4,5.5' können auch zusätzlich mit Aufbereitern 17,17', und ebenfalls auch mit Schwadlegern, die nach innen oder außen fördern, ausgestattet sein.

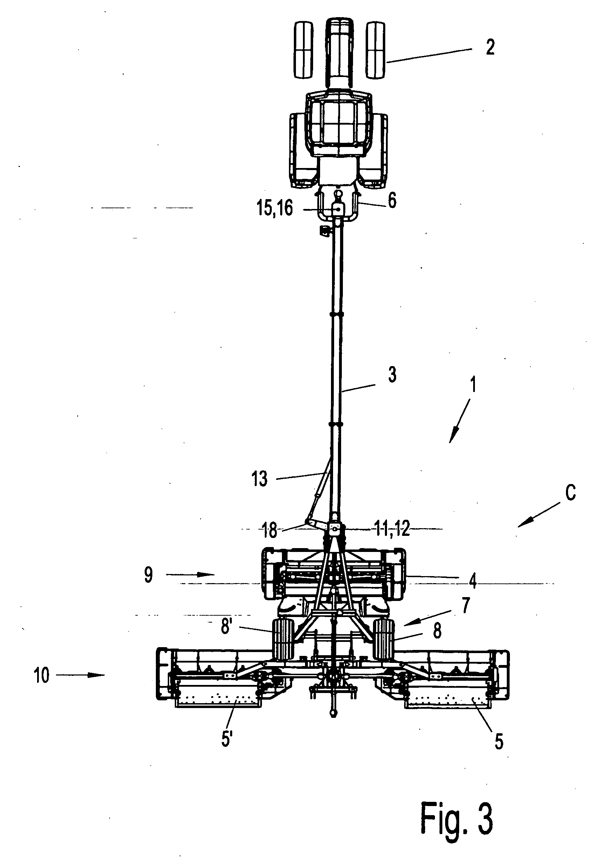

Fig.3 zeigt das Mähwerk 1 nach der Erfindung in einer Draufsicht in einer Zwischenstellung C, in der der Anstellwinkel β,β' identisch zu Null verschwunden ist, so dass das Mähwerk in der Spur des Zugfahrzeugs 1 läuft. Diese Stellung des Mähwerks ist eine Arbeitsstellung, in der der Randstreifen eines Feldes freigemäht werden kann.

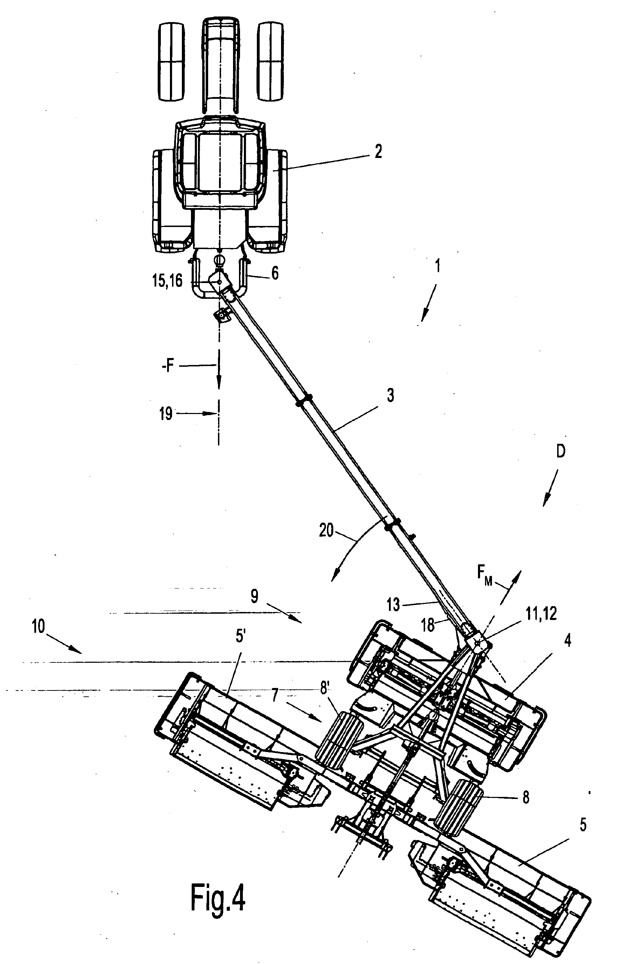

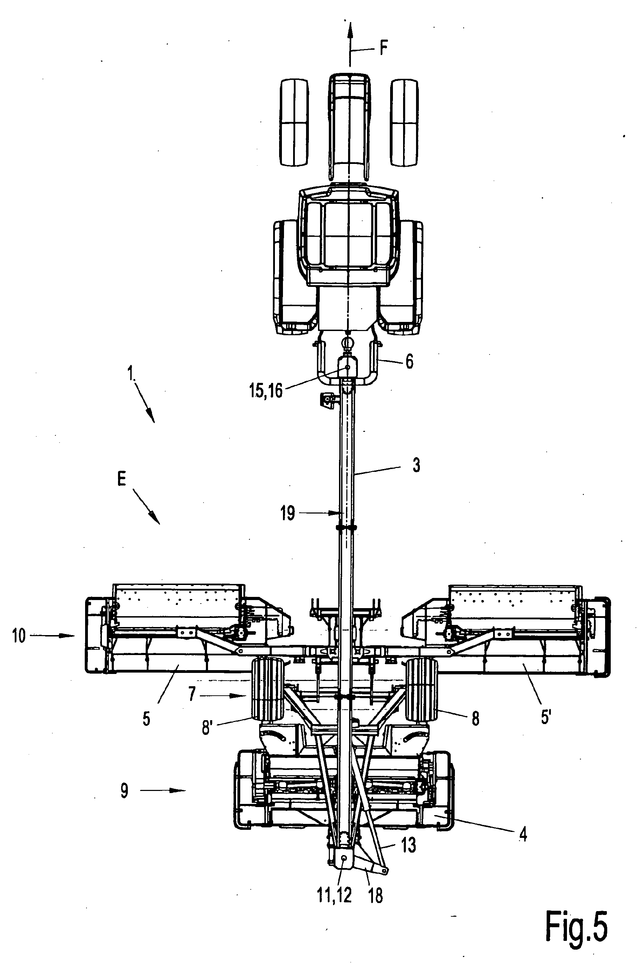

Fig.4 zeigt ein Mähwerk nach der Erfindung in einer Draufsicht in einer Momentaufnahme während des Verschwenkens von der Arbeitsstellung A oder B gemäß Fig.1 bzw. Fig.2 in die Übergangsstellung D gemäß Fig. 5. Durch die Drehung 20 der Zugdeichsel 3 relativ zum Maschinengestell 14 wird das Mähwerk in eine Zwischenstellung E gemäß Fig.5 überführt. Während des Schwenkvorgangs ändert sich die momentane Laufrichtung F$_M$ des Fahrwerks 8, die sich dabei insgesamt gegenüber dem Zugfahrzeug 2 um 180° ändert.

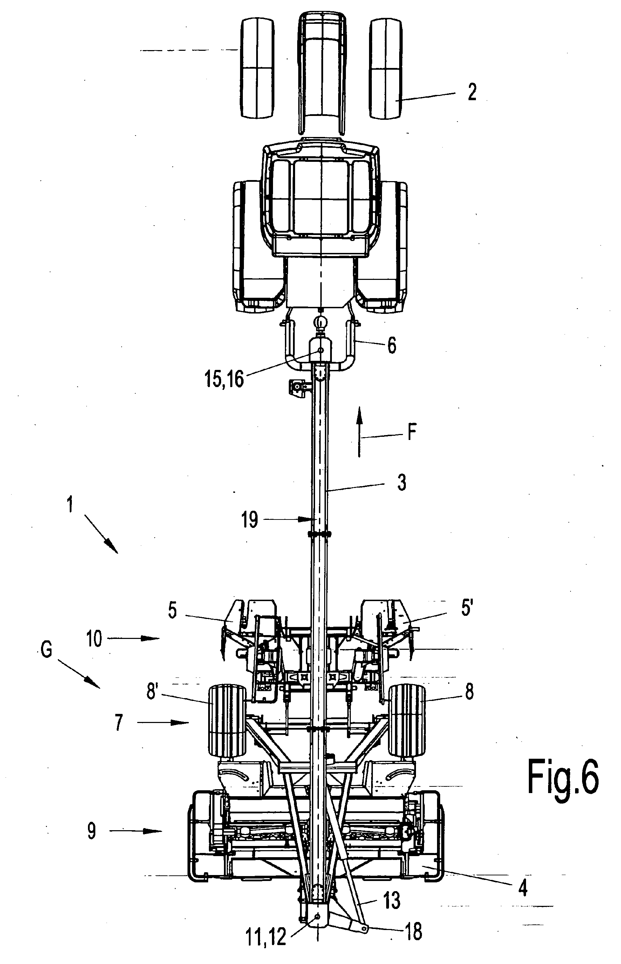

Fig.5 zeigt ein Mähwerk nach der Erfindung in einer Draufsicht in einer Momentaufnahme nach Beendigung des Verschwenkens der Mäheinheiten 4,5,5' und des Fahrwerks 7 in der Stellung E. In dieser Stellung befinden sich die Mäheinheiten 4,5 in Fahrt- und Arbeitsrichtung F gesehen vor der Hochachse 12 des Schwenkgelenks 11 der Zugdeichsel 3. Aus dieser Stellung heraus werden dann die Mäheinheiten 5,5' in eine überwiegend vertikale Lage in die endgültige Transportstellung G gemäß Fig.6 hochgeklappt, wohingegen das Mähwerk 4 in seiner horizontalen Lage unterhalb der Zugdeichsel 3 verbleibt und vom Boden abgehoben wird. Derartige Ausgestaltungen zum Verklappen und Anheben von Mäheinheiten 4,5,5' sind dem Fachmann bekannt und bedürfen an dieser Stell keiner näheren Erläuterung

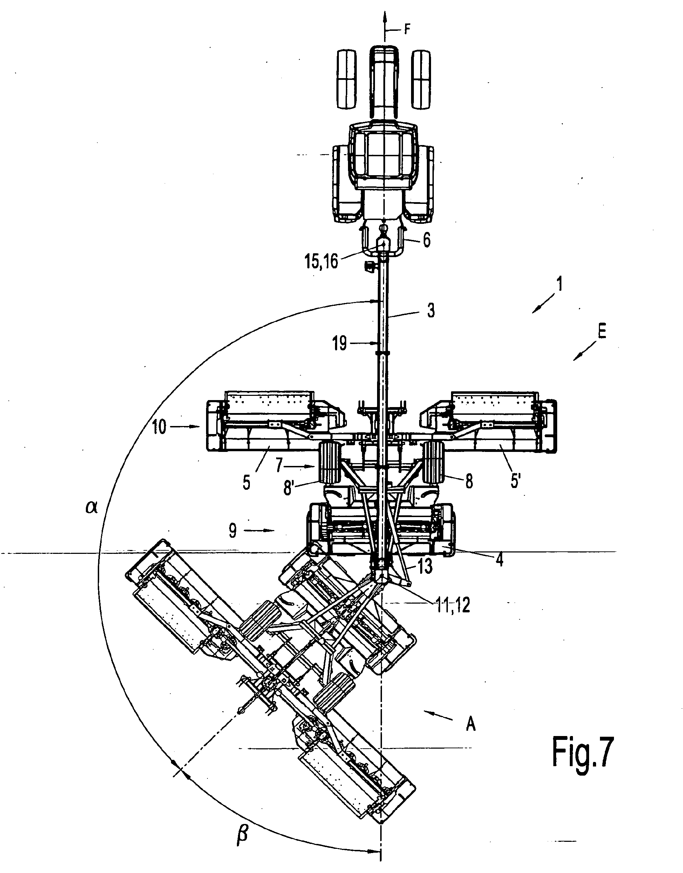

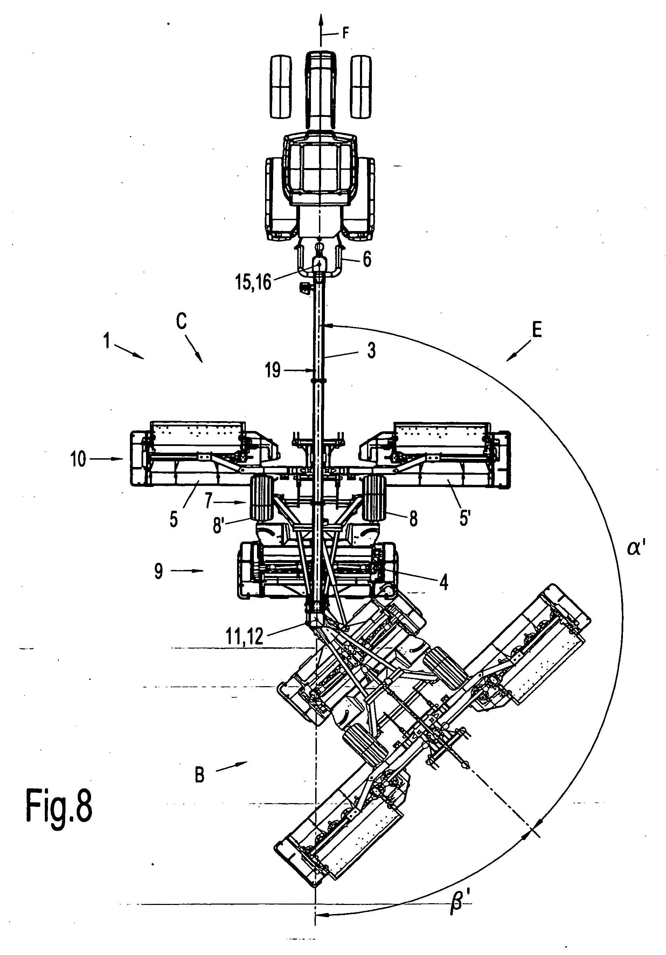

Fig.7 und Fig.8 verdeutlichen den Zusammenhang zwischen einem positiven bzw. negativen Anstellwinkel β,β' und einem positiven bzw. negativen Schwenkwinkel α,α'. Fig.7 verdeutlicht dieses am Beispiel der Arbeitsstellung gemäß Fig.1 und Fig.8 am Beispiel der Fig.2.

In beiden Figuren Fig.7 und Fig.8 ist die Zugdeichsel 3 zum besseren Verständnis um den Anstellwinkel β bzw. β' um die Hochachse 16 in die Mittelstellung geschwenkt dargestellt, so dass die Mäheinheiten 4,5,5' und das Fahrwerk die Stellung A beibehalten jedoch um den Anstellwinkel β,β' gegenüber der Zugdeichsel 3 und damit gegenüber der vertikalen Längsmittelebene 19 abgewinkelt bleiben. Um nun das Maschinengestell 14 mit den Mäheinheiten 4,5 und dem Fahrwerk 7 in die Zwischenstellung E gemäß Fig.5 zu überführen, muss das gesamte Maschinengestell 14 einschließlich der Mäheinheiten 4,5,5' und des Fahrgestells 7 weiter um den Winkel α bzw. α' um die Hochachse 12 verschwenkt werden.

Damit gilt für die Beziehung der Schwenkwinkel

$$\alpha = 180° - \beta \text{ bzw.}$$

$$\alpha' = 180° - \beta'.$$

Da der Anstellwinkel β,β' wesentlich kleiner als 90° sein soll ist erfindungsgemäß der Schwenkwinkel α,α' wesentlich größer als 90° und somit gilt die Beziehung

$$\alpha,\alpha' \gg 90°.$$

Die Erfindung sieht als besonders günstigen Schwenkwinkelbereich einen Bereich zwischen 120° und 150° vor. Vorzugsweise liegt der Schwenkwinkel α, α' bei etwa 135°.

Um die Seitenzugkraft ausgehend von der Anstellung der Zugdeichsel 3 mit dem Anstellwinkel β,β' möglichst gering zu halten, ist es wünschenswert, den Anstellwinkel β,β' dem Betrage nach ebenfalls möglichst gering zu halten. Da aber bei großer vorgegebener Arbeitsbreite 22 des Mähwerks 1 der Spurversatz durch die Arbeitsbreite 22 und die Traktorbreite 24 bereits festgelegt ist, bleiben als Parameter zur Einstellung des Spurversatzes nur die Variablen Zugdeichsellänge 22 und Anstellwinkel β,β'. Der Zugdeichsellänge 22 sind aber wegen der maximal zulässigen Gespannlänge 25 ebenfalls Grenzen gesetzt, so dass die erfinderische Lösung vorsieht, die Gespannlänge 25 bei möglichst großer Arbeitsbreite 22 und geringen Anstellwinkeln β,β' durch die erfinderische Ausgestaltung des Mähwerks zu minimieren.

Mit dieser Ausgestaltung der Erfindung lassen sich in besonders vorteilhafter Bauweise mit zwei Mäheinheiten 4,5 oder 4,5' Arbeitsbreiten 22 im Bereich von etwa 5 Meter bis etwa 7 Meter und mit drei Mäheinheiten 4,5,5' Arbeitsbreiten 22 im Bereich von etwa 7 Meter bis etwa 10 Meter realisieren, wobei die Transportbreite von 3 Meter nicht überschritten wird.

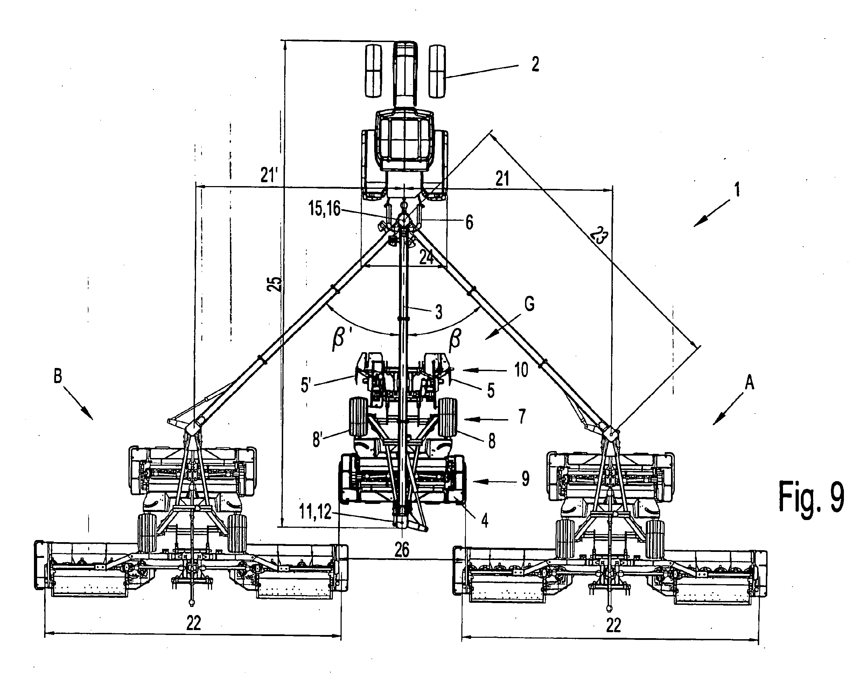

Fig.9 verdeutlicht gegenüberstellend die Zusammenhänge zwischen den unterschiedlichen Betriebsstellungen A und B und der Gespannlänge 25 in der Transportstellung G.

Anhand des zuvor dargelegten Ausführungsbeispiels ist ein Mähwerk nach der Erfindung mit drei Mäheinheiten 4,5,5' dargestellt, wobei dieses Konzept erfindungsgemäß auch auf zwei Mäheinheiten 4,5 bzw. 4,5' anwendbar ist. Ebenso ist es möglich, dem Ausführungsbeispiel weitere Mäheinheiten zum Beispiel angelenkt an längenveränderbaren Ausleger, welche die Arbeitsbreite A vergrößern, hinzuzufügen, so dass die Anzahl der Mäheinheiten keineswegs auf drei Mäheinheiten beschränkt ist. Des weiteren ist es auch möglich, die Zugdeichsel (3) längenveränderbar zu gestalten, indem diese z.B. teleskopierbar ausgeführt ist. Dieses ermöglicht eine weitere Verkürzung der Gespannlänge 25 in der Transportstellung.

**Bezugszeichenliste**

| 1 | Mähwerk |
|---|---|
| 2 | Zugmaschine (Traktor) |
| 3 | Zugdeichsel |
| 4 | erste Mäheinheit |
| 5,5' | zweite Mäheinheit |
| 6 | Kupplungseinrichtung |

| 7 | Fahrwerk |
|---|---|
| 8,8' | Stützräder |
| 9 | erste Staffelreihe |
| 10 | zweite Staffelreihe |
| 11 | Schwenkgelenk |
| 12 | Hochachse |
| 13 | Stellantrieb |
| 14 | Maschinengestell |
| 15 | Schwenkgelenk |
| 16 | Hochachse |
| 17,17' | Aufbereiter |
| 18 | Hebelarm |
| 19 | vertikale Längsmittelebene |
| 20 | Drehrichtung |
| 21,21' | Spurversatz |
| 22 | Arbeitsbreite |
| 23 | Deichsellänge |
| 24 | Traktorbreite |
| 25 | Gespannlänge |
| 26 | Transportbreite |

| A | Arbeitstellung (Betriebsstellung) rechtsseitig |
|---|---|
| B | Arbeitstellung (Betriebsstellung) linksseitig |
| C | Arbeitstellung (Betriebsstellung) mittig |
| D | Zwischenstellung |
| E | Zwischenstellung |
| G | Transportstellung |

| F | Fahrtrichtung |
|---|---|
| $F_M$ | Fahrtrichtung |

| $\alpha,\alpha'$ | Schwenkwinkel |
|---|---|
| $\beta,\beta'$ | Anstellwinkel |

**Patentansprüche**

1. Mähwerk, ausgeführt als gezogenes Mähwerk mit einem Fahrwerk und einer um eine Hochachse verschwenkbaren Zugdeichsel zur Ankoppelung an einem Zugfahrzeug bzw. Traktor, wobei das Mähwerk wenigstens zwei Staffelreihen und wenigstens zwei gestaffelt zueinander liegende Mäheinheiten umfasst, **dadurch gekennzeichnet, dass** die wenigstens zwei Mäheinheiten (4,5) oder (4,5') der Staffelreihen (9,10) in der Arbeitsstellung (A) oder (B) der Mäheinheiten (4,5) oder (4,5') entgegen der Fahrt und Arbeitsrichtung (F) hinter der Hochachse (12) des Schwenkgelenks (11) der Zugdeichsel (3) und in der Transportstellung (G) vor der Hochachse (12) des Schwenkgelenks (11) liegen.

2. Mähwerk nach Anspruch 1, **dadurch gekennzeichnet, dass** durch die Verschwenkung der Zugdeichsel (3) von einer Arbeitsstellung (A) oder (B) in die Transportstellung (G) und umgekehrt sich die Laufrichtung des Maschinengestells (14) relativ zum Traktor umkehrt.

3. Mähwerk nach Anspruch 1, **dadurch gekennzeichnet, dass** das Mähwerk (1) drei Mäheinheiten (4,5,5') umfasst, wobei das erste Mähwerk (4) eine erste Staffelreihe (9) und die hinteren Mähwerke (5,5') eine zweite Staffelreihe (10) bilden.

4. Mähwerk nach Anspruch 1, **dadurch gekennzeichnet, dass** die Hochachse (12) des Schwenkgelenks (11) der Zugdeichsel (3) zwischen der ersten und der letzten Staffelreiche liegt

5. Mahwerk nach Anspruch 1 bis 3, **dadurch gekennzeichnet, dass** das Maschinegestell (14) und/oder das Fahrwerk (7) und/oder die Mäheinheiten (4,5); (4,5');(4,5,5') um die Hochachse (12) zur Überführung des Mähwerks (1) aus dessen/deren Arbeitsstellung (A oder B) in die Transportstellung (G) und umgekehrt um einen Schwenkwinkel ($\alpha$) > 90° verschwenken.

6. Mähwerk nach Anspruch 5, **dadurch gekennzeichnet, dass** der bevorzugte Schwenkwinkelbereich der Schwenkwinkel ($\alpha,\alpha'$) etwa im Bereich 120° bis 150° liegt und der bevorzugte Schwenkwinkel ($\alpha,\alpha'$) vorzugsweise etwa 135° beträgt.

7. Mähwerk nach einem der Ansprüche 1 bis 9, **dadurch gekennzeichnet, dass** der Anstellwinkel ($\beta,\beta'$) mittels eines Stellantriebs (13) durch Verschwenken der Zugdeichsel (3) um die Hochachse (12) verändert werden kann.

8. Mähwerk nach einem der vorhergehenden Ansprüche 1 bis 7, **dadurch gekennzeichnet, dass** die Hochachse (12) der Zugdeichsel (3) von einem Druckmittel betriebenem Stellantrieb (13), ausgebildet als doppeltwirkender Hydraullkzyllnder, überbrückt ist.

9. Mähwerk nach Anspruch 7, **dadurch gekennzeichnet, dass** die Arretierung des Stellantriebs (13) zum Arretierten der Zugdeichsel (3) in der Arbeitsteilung (A oder B) vorgesehen ist.

10. Mähwerk nach Anspruch 5, **dadurch gekennzeichnet, dass** die Arretierung des Stellantriebs (13) zum arretierten der Zugdeichsel (3) in der Transportstellung vorgesehen ist.

11. Mähwerk nach einem oder mehreren der vorhergehenden Ansprüche, **dadurch gekennzeichnet, dass** die zweite Staffelreihe (10) zwei nebeneinander liegende Mähelnheiten (4,5') aufweist.

12. Mähwerk nach einem oder mehreren der vorhergehenden Ansprüche, **dadurch gekennzeichnet, dass** der zweiten Staffelreihe (10) wenigstens eine weitere die Arbeitsbreite (22) vergrößernde Staffelreihe mit längenveränderbaren und hochklappbaren Auslegern nachgelagert ist.

13. Mähwerk nach einem oder mehreren der vorhergehenden Ansprüche, **dadurch gekennzeichnet, dass** die Mähelnheit (4) in der Transportstellung (G) eine überwiegend horizontale Stellung unterhalb der Zugdeichsei (3) und die nachfolgenden Mähelnheiten (5,5') der nachfolgenden Staffelreihe(n) in der Transportstellung (G) eine überwiegend vertikale und hochgeklappte Stellung einnehmen.

14. Mähwerk nach einem oder mehreren der vorhergehenden Ansprüche, **dadurch gekennzeichnet, dass** die Zugdeichsel (3) längenveränderbar ist.

15. Mähwerk nach Anspruch 14, **dadurch gekennzeichnet, dass** die Zugdeichsel (3) teleskopierbar ist.

## Claims

1. A mowing mechanism in the form of a towed mowing mechanism comprising a chassis and a drawbar pivotable about a vertical axis for coupling to a towing vehicle or tractor, wherein the mowing mechanism has at least two echelon rows and at least two mowing units which are arranged in staggered relationship with each other, **characterised in that** the at least two mowing units (4, 5) or (4, 5') of the echelon rows (9, 10) are disposed in the working position (A) or (B) of the mowing units (4, 5) or (4, 5') in opposite relationship to the travel and working direction (F) behind the vertical axis (12) of the pivotal joint (11) of the drawbar (3) and in the transport position (G) in front of the vertical axis (12) of the pivotal joint (11).

2. A mowing mechanism according to claim 1 **charac-**terised in that the direction of movement of the machine frame (14) reverses relative to the tractor by the pivotal movement of the drawbar (3) from a working position (A) or (B) into the transport position (G) and vice-versa.

3. A mowing mechanism according to claim 1 **characterised in that** the mowing mechanism (1) includes three mowing units (4, 5, 5'), wherein the first mowing mechanism (4) forms a first echelon row (9) and the rear mowing mechanisms (5, 5') form a second echelon row.

4. A mowing mechanism according to claim 1 **characterised in that** the vertical axis (12) of the pivotal joint (11) of the drawbar (3) is between the first and the last echelon rows.

5. A mowing mechanism according to claims 1 to 3 **characterised in that** the machine frame (14) and/or the chassis (7) and/or the mowing units (4, 5); (4, 5'); (4, 5, 5') pivot about the vertical axis (12) for transferring the mowing mechanism (1) out of the working position (A or B) thereof into the transport position (G) and vice-versa through a pivot angle ($\alpha$) > 90°.

6. A mowing mechanism according to claim 5 **characterised in that** the preferred pivot angle range of the pivot angles ($\alpha$, $\alpha$') is approximately in the range of 120° to 150° and the preferred pivot angle ($\alpha$, $\alpha$') is preferably about 135°.

7. A mowing mechanism according to one of claims 1 to 6 **characterised in that** the setting angle ($\beta$, $\beta$') can be altered by means of an adjusting drive (13) by pivotal movement of the drawbar (3) about the vertical axis (12).

8. A mowing mechanism according to one of preceding claims 1 to 7 **characterised in that** the vertical axis (12) of the drawbar (3) is bridged over by a pressure fluid-operated adjusting drive (13) in the form of a double-acting hydraulic cylinder.

9. A mowing mechanism according to claim 7 **characterised in that** arresting of the adjusting drive (13) is provided for arresting the drawbar (3) in the working position (A or B).

10. A mowing mechanism according to claim 5 **characterised in that** the arresting of the adjusting drive (13) is provided for arresting the drawbar (3) in the transport position.

11. A mowing mechanism according to one or more of the preceding claims **characterised in that** the second echelon row (10) has two mutually juxtaposed mowing units (4, 5').

12. A mowing mechanism according to one or more of the preceding claims **characterised in that** mounted after the second echelon row (10) is at least one further echelon row which increases the working width (22) and has variable-length upwardly pivotable arms.

13. A mowing mechanism according to one or more of the preceding claims **characterised in that** in the transport position (G) the mowing unit (4) assumes a predominantly horizontal position beneath the drawbar (3) and the following mowing units (5, 5') of the following echelon row or rows in the transport position (G) assume a predominantly vertical and upwardly pivoted position.

14. A mowing mechanism according to one or more of the preceding claims **characterised in that** the drawbar (3) is variable in length.

15. A mowing mechanism according to claim 14 **characterised in that** the drawbar (3) is telescopic.

**Revendications**

1. Unité de fauche conformée en unité de fauche tractée avec un train de roulement et une flèche d'attelage, apte à pivoter autour d'un axe vertical, pour l'atteler à un véhicule tracteur, respectivement à un tracteur, l'unité de fauche comprenant au moins deux rangées échelonnées et au moins deux unités de coupe échelonnées l'une par rapport à l'autre, **caractérisée en ce que**, par rapport au sens de marche et de travail (F), les au moins deux unités de coupe (4, 5) ou (4, 5') des rangées échelonnées (9, 10) se trouvent, dans la position de travail (A) ou (B) des unités de coupe (4, 5) ou (4,5'), derrière l'axe vertical (12) de l'articulation pivotante (11) de la flèche d'attelage (3) et, dans la position de transport (G), devant l'axe vertical (12) de l'articulation pivotante (11).

2. Unité de fauche selon la revendication 1, **caractérisée en ce que**, du fait du pivotement de la flèche d'attelage (3) depuis une position de travail (A) ou (B) vers la position de transport (G) et inversement, le sens de déplacement du bâti de machine (14) par rapport au tracteur est inversé.

3. Unité de fauche selon la revendication 1, **caractérisée en ce que** l'unité de fauche (1) comprend trois unités de coupe (4, 5, 5'), la première unité de coupe (4) formant une première rangée échelonnée (9) et les unités de coupe (5, 5') formant une seconde rangée échelonnée (10).

4. Unité de fauche selon la revendication 1, **caractérisée en ce que** l'axe vertical (12) de l'articulation pivotante (11) de la flèche d'attelage (3) se trouve entre les première et dernière rangées échelonnées.

5. Unité de fauche selon la revendication 1 ou 3, **caractérisée en ce que** le bâti de machine (14) et/ou le train de roulement (7) et/ou les unités de coupe (4, 5) ; (4, 5') ; (4, 5, 5') pivotent d'un angle de pivotement (α) > 90° autour de l'axe vertical (12) pour transférer l'unité de fauche (1) depuis sa position de travail (A ou B) vers la position de transport (G) et inversement.

6. Unité de fauche selon la revendication 5, **caractérisée en ce que** la plage d'angle de pivotement préférée de l'angle de pivotement (α, α') est d'environ de l'ordre de 120° à 150°, et l'angle de pivotement préféré (α, α') est de préférence égal à environ 135°.

7. Unité de fauche selon une des revendications 1 à 6, **caractérisée en ce que** l'angle de positionnement (β, β') peut être modifié, au moyen d'une commande de positionnement (13), en pivotant la flèche d'attelage (3) autour de l'axe vertical (12).

8. Unité de fauche selon une des revendications précédentes 1 à 7, **caractérisée en ce que** l'axe vertical (12) de la flèche d'attelage (3) est assisté par une commande de positionnement (13) actionnée par un fluide sous pression et conformée en vérin hydraulique à double effet.

9. Unité de fauche selon la revendication 7, **caractérisée en ce qu'**il est prévu d'immobiliser la commande de positionnement (13) pour immobiliser la flèche d'attelage (3) dans la position de travail (A ou B).

10. Unité de fauche selon la revendication 8, **caractérisée en ce qu'**il est prévu d'immobiliser la commande de positionnement (13) pour immobiliser la flèche d'attelage (3) dans la position de transport.

11. Unité de fauche selon une ou plusieurs des revendications précédentes, **caractérisée en ce que** la seconde rangée échelonnée (10) comporte deux unités de coupe juxtaposées (4, 5').

12. Unité de fauche selon une ou plusieurs des revendications précédentes, **caractérisée en ce qu'**à la seconde rangée échelonnée (10) succède au moins une autre rangée échelonnée qui augmente la largeur de travail (22) et qui comporte des bras de longueur variable et relevables.

13. Unité de fauche selon une ou plusieurs des revendications précédentes, **caractérisée en ce que**, dans la position de transport (G), l'unité de coupe (4) adopte une position sensiblement horizontale sous la flèche d'attelage (3) et les unités de coupe suivantes (5, 5') de la (des) rangée(s) échelonnée(s) suivante(s) adoptent une position sensiblement verticale et relevée.

**14.** Unité de fauche selon une ou plusieurs des revendications précédentes, **caractérisée en ce que** la flèche d'attelage (3) est de longueur variable.

**15.** Unité de fauche selon la revendication 14, **caractérisée en ce que** la flèche d'attelage (3) est télescopique.

Fig. 1

Fig. 2

Fig. 3

Fig.4

Fig.5

Fig.6

Fig.7

Fig.8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 503395 A